# EUROPEAN PATENT SPECIFICATION

(11) **EP 3 807 010 B1**
(45) Date of publication and mention of the grant of the patent: **30.11.2022**
(21) Application number: 19736782.4
(22) Date of filing: 18.06.2019
(51) Int. Cl.: B02C 18/16

(54) **ORGANIC-MATTER FRAGMENTATION APPARATUS**
VORRICHTUNG ZUR FRAGMENTIERUNG VON ORGANISCHEN MATERIALIEN
APPAREIL DE FRAGMENTATION DE MATIÈRE ORGANIQUE

(30) Priority: 18.06.2018 GB 201809968
(43) Date of publication of application: 21.04.2021
(73) Proprietor: Høj Life Limited, Brentford TW8 9ES (GB)
(72) Inventor: FOLMANN, Simon Villum, London NW6 5AL (GB); HANSEN, Matias Taul, 8600 Silkeborg (DK)
(74) Representative: Hocking, Adrian Niall
(86) International application number: PCT/GB2019/051701
(87) International publication number: WO 2019/243803

(56) References cited:
- DE-A1-102010 017 719
- US-A1- 2015 298 135
- US-A1- 2016 106 262
- US-A1- 2018 126 386

## Description

The present invention relates to an organic-matter holding chamber. The invention further relates to a handholdable organic-matter cutter.

Organic matter, in particular organic matter derived from plants, may be required to be fragmented, cut, ground or otherwise reduced in size before utilisation. Said organic matter may particularly include tobacco, culinary or medicinal plant-based material.

Typically, such organic matter is required or preferred to be fragmented by an individual shortly before use, and therefore personal, handholdable or transportable fragmenting devices are required.

Such conventional fragmenting devices have a chamber for holding the organic matter. The chamber may be required to be opened and closed to insert or remove organic material. This may be difficult or impractical for elderly or infirm persons, for example those with arthritis or other conditions effecting motor control. This can be of particular significance to organic-matter fragmenting devices as persons with such conditions may require the use of organic matter for medicinal treatment.

Additionally, typical fragmenting devices grind organic matter, which can result in the destruction, unusability or deterioration of parts of the organic matter or chemical compounds within the organic matter.

Furthermore, conventional fragmenting devices can be time consuming to use and may not efficiently fragment organic matter due to organic matter not being directed to a point of fragmentation.

DE 102010017719A1 discloses a mixing bowl for a mixer for accommodating foodstuff, which has a lid including a magnetic region cooperating with magnetic counter regions at the container for supporting a screw cap in a locked position.

The present invention seeks to provide a solution to these problems.

According to the present invention, there is provided an organic-matter holding chamber for holding organic-matter in a handholdable organic-matter fragmentation apparatus, the chamber comprising: a first chamber part having a first magnetic member; a second chamber part having second and third magnetic members; the first and second chamber parts being rotatable relative to each other to adopt locked and unlocked conditions and the second and third magnetic members being angularly offset relative to each other; when the chamber is in the locked condition, the first and second magnetic members facing each other so as to magnetically attract; and the first and third magnetic members being positionable via angular displacement of the first and second chamber parts to magnetically repel thereby biasing the first and second chamber parts away from each to adopt the unlocked condition characterised in that the second chamber part includes a partitioning element removable from a body of the second chamber part, the third magnetic member being positioned on said partitioning element, and a fourth magnetic member on the body, the third and fourth magnetic members being positionable so as to be aligned and oriented so as to magnetically attract, thereby locking the partitioning element to the body.

The organic matter holding chamber may be any chamber, cavity or compartment in which organic matter may be held, either before, after or during fragmentation. Organic matter may be defined as or include matter derived from living things, in particular plants, although synthetic materials may also be considered. Fragmenting apparatus may apply to any apparatus capable of cutting or grinding. The magnetic assembly as described above enables such chambers to be openable and lockable without requiring axial separation forces. Instead only relatively light rotational forces are required to be provided, with the matching first and third magnetic members assisting the opening of the chamber. This enables those with inhibited motor or manual control to open the chamber. The attractive first and second magnetic members help to prevent the unintentional opening of the chamber.

In a preferable embodiment, the organic matter holding chamber may further comprise an organic matter cutter having a removably attachable static cutting blade. The organic matter cutter can cut organic matter held between the first and second chamber parts and/or cut organic matter which is to be held between the first and second chamber parts. The static cutting element can increase the amount of cutting which the organic matter cutter is able to achieve. The removability allows for the static cutting element to be sharpened remote from the fragmenting apparatus. The organic-matter cutter may be at or adjacent to the organic-matter chamber, for example being above the first chamber part. Therefore, the organic-matter cutter may not necessarily be between the first and second chamber parts. The organic matter cutter is preferably mechanically actuatable, and therefore the organic-matter fragmentation apparatus and associated cutter is not electric or electrically operable. Here the organic-matter cutter is actuatable via manual rotation. Thus, operating the cutter and opening the organic matter-holding chamber both via manual rotation may allow for a consistent or uniform operation of the organic matter fragmentation device. This may ease user interaction with the device. Whilst a cutter is described, a grinder or other fragmenting device may be considered.

Preferably, the second and third magnetic members may be coplanar or substantially coplanar. The coplanarity allows for the first and second chamber parts to be moved in the same plane, rather than axially, to prevent or limit the requirement for an axial force to be applied.

Advantageously, at least one of the first and second chamber parts may have a rotationally symmetrical profile. A rotationally symmetrical profile allows for the chamber parts to be correctly assembled in multiple orientations.

Beneficially, there may be a plurality of sets of first, second and third magnetic members, each said set of magnetic members being angularly offset relative to an adjacent set of magnetic members. A plurality of sets of magnetic members enable the first and second chamber parts to form a stronger and broader force of magnetic attraction and/or repulsion.

The second chamber part includes a partitioning element removable from a body of the second chamber part, the third magnetic member being positioned on said partitioning element, and a fourth magnetic member on the body, the third and fourth magnetic members being positionable so as to be aligned and oriented so as to magnetically attract, thereby locking the partitioning element to the body. The partitioning element may here be a sieve, filter or sifter and the magnetic members allow for the sieve to be readily removable and attachable. This enables the attachment of sieves of differing fineness so as to customise the fineness of organic material admissible to the holding chamber. Whilst a partitioning element is described with the fourth magnetic member, it will be appreciated that the fourth magnetic member may be present without the partitioning element. The sets of first, second and third magnetic members may each include a fourth magnetic member.

Additionally, the partitioning element may be repositionable relative to the body via angular displacement so that the third and fourth magnetic members are misaligned, thereby unlocking the partitioning element to the body. This prevents or limits the requirement to provide axial force to remove the partitioning element.

According to an embodiment not covered by the present claims, it is provided a handholdable organic-matter cutter for cutting organic matter, the cutter comprising: a rotatable cutting element for cutting organic matter; and a presenting element which defines a presenting surface for presenting the organic matter to be cut by the rotatable cutting element, the presenting surface extending from a rotational axis of the rotatable cutting element in at least a substantially radial direction; the presenting surface being curved along at least a majority of its longitudinal extent.

A curvate presenting surface increases the length of presenting surface in the cutting chamber, thereby increasing the amount of organic matter which can be cut in a given time, thereby increasing the efficiency of the cutter. Additionally, a curvate presenting surface can direct the organic material towards radially distally where a tangential speed of the rotatable cutting element is greater and therefore cutting is most efficient. Cutting rather than grinding is preferred due to preservation of the structure of trichomes which can exist as part of certain organic matter and may have a high density of desirable chemical compounds, which may be important for medicinal reasons. However, cutting may be preferred for other reasons, such as the creation of a finer and/or more aerated texture of fragmented organic matter. The cutter is preferable manually actuatable via rotation. However, it will be appreciated that electrically operated cutters may also be considered.

Preferably, the presenting surface may include a radially convex surface on one side of the presenting element and a radially concave surface on an opposing side of the presenting element. The radially convex surface directs the organic material radially outwards, should the direction of rotation be towards the radially convex surface. The radially concave surface collects the organic material at the presenting surface, should the direction of rotation be towards the radially convex surface

Beneficially, there may be are a plurality of presenting elements. This helps to delimit multiple cutting sub-chambers and therefore increase the amount of cutting.

Preferably, the organic matter cutter further comprises a static cutting element removably attachable to a lower surface of the presenting element. The static cutting element can increase the amount of cutting that takes place at the presenting surface. The removability allows for the static cutting element to be sharpened remote from the fragmenting apparatus. The static cutting element preferably matches or corresponds to the shape of the presenting element.

Advantageously, the radially convex surface of a first presenting element may be contiguous with the radially concave surface of a further presenting element. The presenting surfaces being contiguous prevents organic matter being trapped in an intermediate area between the two presenting surfaces. The total presenting surface area is also thereby maximised.

Additionally, the presenting elements may be at least substantially equiangularly spaced apart. This enables the cutting sub-chambers delimited by the presenting elements to be or be substantially equal in size so as to assist with a uniformity of cutting of the organic matter inserted therein.

Preferably, the presenting surface may be at least in part convex in an axial direction. An axially convex surface enables organic matter to be directed downwards towards the rotatable cutting element as well as upwards to encourage circulation of the organic matter.

Optionally, the presenting surface may have a chamfer, the chamfer being non-uniform in a longitudinal direction. The non-uniformity encourages organic matter to be directed towards a radially distal direction.

Preferably, the first chamber part has a female engagement member and the second chamber part has a male engagement member; at least one of the male and female engagement members having a sloped element; when the chamber is in the locked condition, the male engagement member is engaged with the female engagement member; and when adopting the unlocked condition, the first chamber part is movable relative to the second chamber part such that the or each sloped element assists a release of the first and second magnetic members and a disengagement of the male and female engagement members.

The male and female engagement members or means prevents or limits lateral motion of the first chamber part relative to the second chamber part. This prevents unintentional opening or separation of the first chamber part relative to the second chamber part, for example if organic matter is stored in the holding chamber during transit. However, the or each sloped element allows for the male and female engagement members to be disengaged by only applying rotational force, rather than applying an axial separation force. Additionally, the sloped element encourages the movement of the magnetic fastening means away from each other, so as to assist a release.

Preferably, there is a sloped element at each circumferential end of the male or female engagement member. Sloped elements at each end allow for the first and second chamber parts to be rotated relatively in either direction to assist a release.

Advantageously, both the male and female engagement member may have at least one sloped elements. Both engagement members or engagement means having sloped elements, which may have each have a pitch which corresponds to each other, ensure that the engagement members or engagement means are readily and without significant force able to engageably move relative to each other and/or ride up relative to each other.

Beneficially, there may be a plurality of equiangularly spaced apart pairs of male and female engagement member. A plurality of engagement members or means prevents or limits an angular separation force from disengaging or separating the chamber parts. It may also provide additional securement against lateral forces in more directions.

According to an embodiment not covered by the present claims, it is provided a handholdable organic-matter cutter for cutting organic matter, the cutter comprising: a rotatable cutting element for cutting organic matter; a presenting element for presenting the organic matter to be cut by the rotatable cutting element, the presenting element extending at least substantially radially relative to a rotational axis of the rotatable cutting element; and the presenting element having first and second presenting surfaces, each presenting surface being at opposing longitudinal sides of the presenting element, the first presenting surface having a greater longitudinal extent than the second presenting surface, and the first presenting surface extending beyond the rotational axis.

The first presenting surface extending beyond the rotational axis allows for organic material to be distributed at the presenting surface along a greater extent of the cutting chamber. This enables a greater efficiency of cutting to take place.

Preferably, the first presenting surface may be concave and the second presenting surface may be convex. The radially convex surface directs the organic material radially outwards, should the direction of rotation be towards the radially convex surface. The radially concave surface collects the organic material at the presenting surface, should the direction of rotation be towards the radially convex surface

Advantageously, there may be a plurality of presenting elements. This helps to delimit multiple cutting sub-chambers and therefore increase the amount of cutting.

Beneficially, the radially convex surface of a first presenting element may be contiguous with the radially concave surface of a further presenting element. The presenting surfaces being contiguous prevents organic matter being trapped in an intermediate area between the two presenting surfaces. The total presenting surface area is also thereby maximised.

Optionally, the first and/or second presenting surface may be at least in part convex in an axial direction. An axially convex surface enables organic matter to be directed downwards towards the rotatable cutting element as well as upwards to encourage circulation of the organic matter.

Additionally, a rotatable-cutting-element adjacent portion of the presenting surface may extend at least substantially parallel to the axial direction to form an organic-matter stop. The at least substantially extending axial surface provides a more sudden or abrupt stop than if the presenting surface sloped towards the rotatable cutting element. This may therefore allow the organic matter to be cut more efficiently.

According to an embodiment not covered by the present claims, it is provided a handholdable organic-matter cutter for cutting organic matter, the cutter comprising: a rotatable cutting element for cutting organic matter; and a presenting element which defines a presenting surface for presenting the organic matter to be cut by the rotatable cutting element, the presenting surface extending from a rotational axis of the rotatable cutting element in at least a substantially radial direction; and a static cutting element removably attachable to a lower surface of the presenting element.

Preferably, the static cutting element may overlay the presenting element. The static cutting element overlying the presenting element ensures that the organic matter can be cut between the rotatable blade and the static blade at the presenting surface, where it has been upwardly presented.

Advantageously, the static cutting element may be magnetically attachable to the presenting element. Magnetic attachment allows for the static cutting element to be rapidly and repeatedly removably attachable.

According to an embodiment not covered by the present claims, it is provided an organic-matter holding chamber for holding organic-matter in a handholdable organic-matter fragmentation apparatus, the chamber comprising: a first chamber part having a first magnetic member presenting a first magnetic pole; a second chamber part having a second magnetic presenting second and third magnetic poles; the first and second chamber parts being rotatable relative to each other to adopt locked and unlocked conditions and the second and third magnetic poles being angularly offset relative to each other; when the chamber is in the locked condition, the first and second magnetic poles facing each other so as to magnetically attract; and the first and third magnetic poles being positionable via angular displacement of the first and second chamber parts to magnetically repel thereby biasing the first and second chamber parts away from each to adopt the unlocked condition.

The second magnetic member may be positioned so as to have magnetic poles lying in the same plane and angularly offset from one another. For example, a bar magnet may be positioned so as to lie flat on the second chamber part. The invention will now be more particularly described, by way of example only, with reference to the accompanying drawings, in which:
Figure 1 shows an exploded view of an organic-matter fragmentation apparatus having a holding chamber in accordance with the invention and an organic matter cutter;
Figure 2 shows a top perspective view of the organic-matter cutter of Figure 1 with a rotatable cutting blade removed for clarity;
Figure 3 shows a top view of a static cutting element for use with the organic matter fragmentation apparatus of Figure 1;
Figure 4 shows a top perspective view of the rotatable cutting blade for use with the organic matter cutter of Figure 1;
Figure 5 shows a top view of first chamber part for use with the holding chamber of Figure 1;
Figure 6 shows a top perspective view of a first chamber part of Figure 5;
Figure 7 shows a bottom view of a second chamber part for use with the holding chamber of Figure 1;
Figure 8 shows a partitioning element for use with holding chamber of Figure 1;
Figure 9 shows a perspective view of a funnel for use with the organic-matter fragmentation apparatus of Figure 1;
Figure 10 shows a perspective view of a stop for the funnel of Figure 9; and
Figure 11 shows a cross-sectional view of the organic-matter fragmentation apparatus of Figure 1 in an assembled condition.

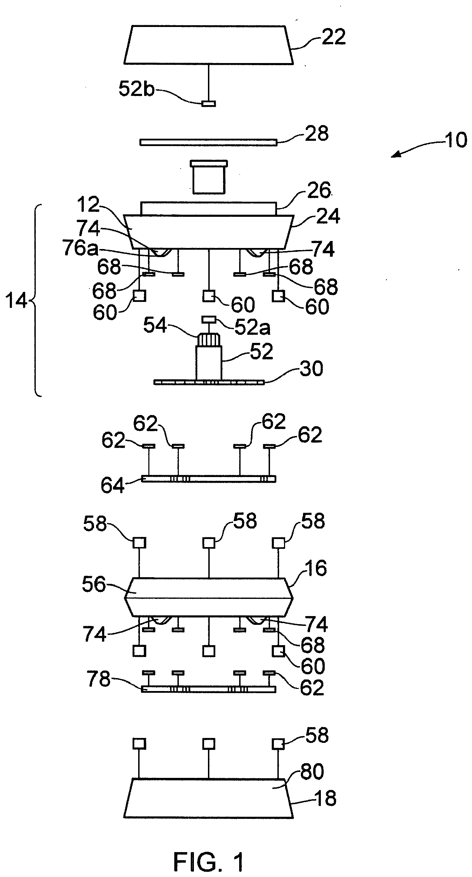

Referring firstly to Figure 1 there is shown a modular organic-matter fragmentation apparatus 10 having a cutting chamber 12 preferably including or at least in part defining an organic matter cutter 14, a primary holding chamber 16 for holding or to hold organic matter and/or a secondary holding chamber 18 for holding or to hold finer organic matter than the primary holding chamber 16.

The cutting chamber 12 preferably has a cutting chamber lid 22 as shown in Figure 1 and a cutting chamber body 24. The lid 22 preferably has a circular horizontal cross section and the body 24 has an annular horizontal cross-section, which preferably correspond to each other. The lid 22 and cutting chamber body 24 are shaped so as to be complementarily engageable or connectable. Here the body 24 has a lip 26 with an annular cross section which is engageable and/or receivable at a rim of the cutting chamber lid 22. A washer 28, preferably formed from low friction material, may be positioned or fixed at the lid 22 and/or cutting chamber 12 to enable relative rotation therebetween. Alternatively, at least part of the lid and/or rim may be formed from one or more low-friction materials.

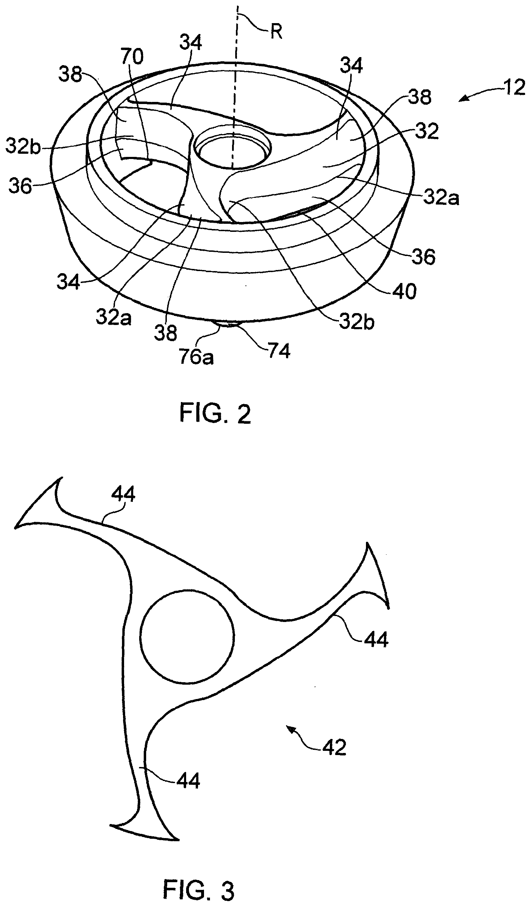

Referring in particular to Figures 2 to 4 there is shown the organic matter cutter 14. The organic matter cutter 14 is positioned in, at or adjacent to the cutting chamber 12. The organic matter cutter 14 includes a rotatable cutting element 30, having at least one blade, for cutting or to cut organic matter and a presenting surface 32 for presenting or to present the organic matter to be cut by the rotatable cutting element 30. The presenting surface 32 extends at least substantially radially relative to a rotational axis of the rotatable cutting element 30 and the presenting surface 32 is curved along at least a majority of its longitudinal extent.

The organic matter cutter 14 here has at least one, preferably a plurality, and more preferably three presenting elements 34. The presenting elements 34 may be contiguous with or connected to the cutting chamber body 24. Here the or each presenting element 34 is unitarily formed with the cutting chamber body 24. The presenting elements 34 extend at least substantially radially or laterally relative to the rotational axis of the rotatable cutting element 30, thereby substantially creating a spoke like configuration. Therefore, the presenting element 34 defines or delimits three cutting sub-chambers within the cutting chamber 12.

The or each presenting surface 32 and/or presenting element 34 is preferably curvate and/or arcuate along an entirety of a radial extent. A curvature of the or each presenting surface 32 may be irregular such that it has a tighter curve towards a radial or longitudinal outer edge of the presenting surface 32. Said curvature may therefore be a catenary or sinusoidal curve.

The presenting surface 32 preferably includes a radially convex surface, which may be considered to be a major presenting surface 32a, on one side of each presenting element 34 and a radially concave surface, which may be considered to be a minor presenting surface 32b, on an opposing side of each presenting element 34. This is such that the presenting surfaces 32 on either side of the presenting element 34 are both curved towards the same circumferential direction. Whilst convex and concave surfaces are described, it will be appreciated that both sides of the presenting element may be radially convex or concave. In other words, the radial extent of the presenting surface 32 may be convex on one side of the presenting element 34 and concave on the other side.

The major presenting surface 32a of one presenting element 34 is contiguous with the minor presenting surface 32b of the adjacent presenting element 34, although it will be appreciated that they may not be contiguous. Given their opposing curvatures, the transition between the major and minor presenting surfaces 32a, 32b may be considered to be a point of inflection. Said inflection may be smoothly curved or angular. The presenting elements 34 are at least substantially equiangularly spaced apart and therefore here are positioned at or substantially at 120-degree intervals, although it will be appreciated that the presenting elements may not be equiangularly spaced apart. The major presenting surface 32a has a longitudinal or substantially radial extent greater than a radius of the cutting chamber 12.

The major presenting surface 32a extends beyond the axis of rotation R the of rotatable cutting element 30. This is that the major presenting surface 32a ends radially beyond the radius of the cutting chamber 12, the radius defined from a point of contact between the presenting element 34 and the cutting chamber body 24 and the axis of rotation R of the rotatable. The major presenting surface 32a preferably has a counter curve at the radially outermost position of the presenting element 34.

The presenting surface 32 is at least in part convex in an axial direction. Here the axial extent of the major and minor presenting surfaces 32a, 32b of each presenting element 34 are convex. This is such that, adjacent from or from a lowermost edge of each presenting element 34, the presenting surface 32 extends circumferentially away from a radial centre line of the associated presenting element 34, forming a lower chamfer 36 or bevel, before extending circumferentially towards a radial centre line of the associated presenting element 34, forming an upper chamfer 38 or bevel. A circumferential cross-section of the or each presenting element 34 may therefore be or substantially be diamond shaped. Here the chamfers 36, 38 are preferably curvate, although it will be appreciated than they may in fact be substantially planar. The transition between the upper and lower chamfers 38, 36 is here a sharp or angular transition, although it will be appreciated that it may be a smoothed or curved transition. The lower and or upper chamfer 36, 38 may preferably have an offset to the axial direction of between 10 and 20 degrees and more preferably between 15 and 17 degrees. The or each chamfer 36, 38 is preferably non-uniform in at least a longitudinal direction.

Each chamfer may be non-uniform or asymmetrical. For example, here the pitch and circumferential or lateral extent of the upper chamfer 38 of the major presenting surface 32a varies in a radial or longitudinal direction. That is, closest to the axis of rotation R or centre, the lateral extent of the upper chamfer 38 may be vanishing and/or insignificant and the pitch may be greatest. Towards a radially outermost edge, the pitch of the lateral extent may be smallest, and the lateral extent may be greatest. Similar or the same non-uniformity may apply to the other chamfers.

Additionally, the pitch of each chamfer 36, 38 may vary in an axial or vertical extent. For example, at the lowermost part of the lower chamfer 36, the pitch of the chamfer may be aligned or substantially aligned with an axial direction, whereas at the transition between the upper and lower chamfers 38, 36, the pitch may be lowest.

Despite the above described lower chamfer, the axially lowermost surface of each lower chamfer 36 may be aligned or substantially aligned with the axial direction. This is so that a lowermost surface of the presenting element 34, which is or is substantially parallel with a radial plane, is or is substantially perpendicular to the lowermost surface of each lower chamfer 36. In this way, a stop 40 for organic matter may be formed.

Referring in particular to Figure 3, the organic matter cutter 14 preferably further comprises a removably attachable static cutting element 42. The static cutting element 42 may be formed from metal, and preferably from stainless steel, and have at least one sharp and/or sharpenable cutting edge. The static cutting element 42 and/or the lowermost surface of the presenting element 34 may include magnetic members 42a, which may in use face the presenting element 34, or may be formed from magnetic material so that the static cutting element 42 is magnetically attachable to the presenting element 34. A shape of the profile of the static cutting element 42 preferably corresponds to that of the presenting element and in this way the static cutting element has a plurality of cutting arms 44, each having at least one cutting edge. The static cutting element 42 preferably overlies the presenting element 34 and/or *vice vera.*

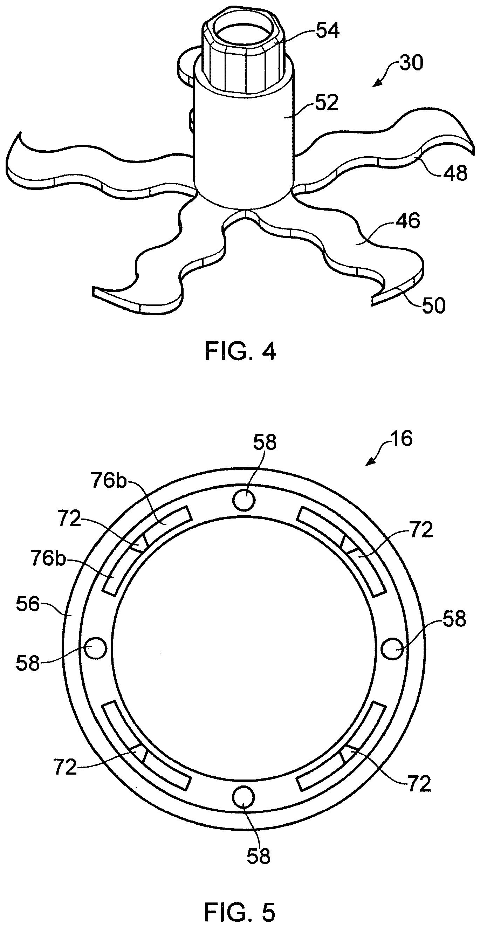

Referring in particular to Figure 4, the rotatable cutting element 30 preferably has five radially extending blades 46, although any number of blades 46 may be considered. Each blade 46 is preferably substantially planar and may have a cutting edge at each circumferentially or laterally facing edge. Each blade 46 here has a plurality of laterally extending protrusions 48 along a longitudinal extent of the blade 46. This is such that each blade has an undulating profile which provides a greater length of cutting edge and/or allows for organic material to be grabbed or dragged along to the presenting element 34. There is a hooked portion 50 at the end of each blade 46, this is such that each blade 46 resembles a scythe or a sickle.

An axially extending pin 52 extends from the axis of rotation R of the rotatable cutting element 30. The axially extending pin 52 may be at least in part passively or actively magnetic or have a magnetic element 52a. The end of the pin 52 furthest from the cutting blade 46 preferably has a gear 54 or pinion. The presenting element 34 has an axially extending aperture through which the pin 52 is receivable. The lid 22 has a centrally positioned axially extending recess which is complementarily shaped to the gear 54, into which the gear 54 of the pin 52 is receivable. At least part of the recess is preferably passively or actively magnetic, or have a magnetic element 52b, so as to be magnetically attractable to the pin 52. A bushing or other bearing may be positionable between the axially extending aperture of the presenting element 34 and the pin 52.

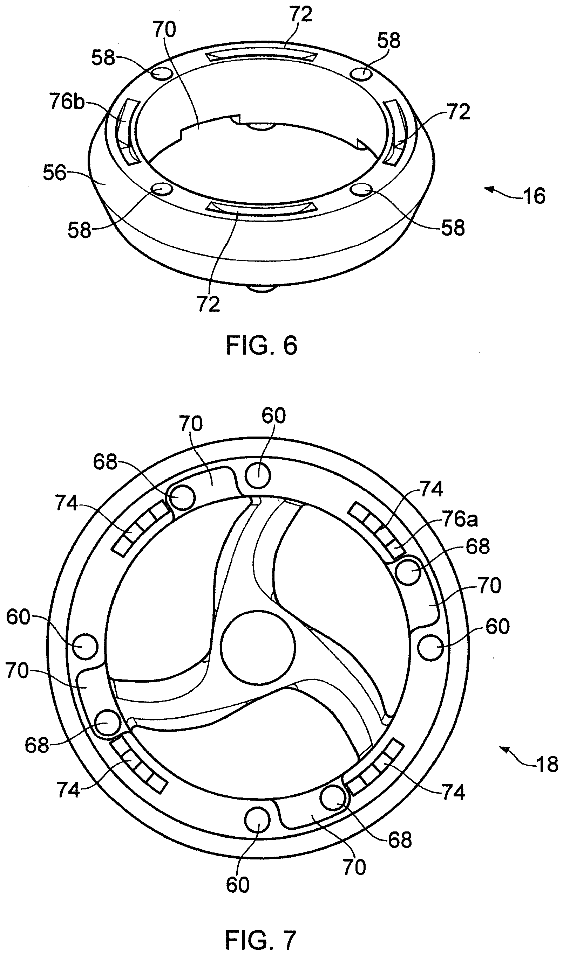

Referring to Figures 5 to 8, the primary holding chamber 16, which may be considered to be an organic-matter holding chamber, comprises a first chamber part 56. The first chamber part 56 preferably has an annular or substantially circular profile and is therefore rotationally symmetrical, although other shaped profiles may be considered.

The primary holding chamber 16 further comprises a second chamber part, which here may be at least part of the cutting chamber body 24 and is preferably a lower surface of the cutting chamber body 24. The first chamber part 56 and the second chamber part 24 preferably have similar and/or corresponding profiles.

The first chamber part 56 has at least one first magnetic member 58 and the second chamber part 24 has at least one set of angularly offset second and third magnetic members 60, 62. The angularly offset may preferably be between 2 and 10 degrees and more preferably 5 degrees. The first and second chamber parts 56, 24 are rotatable relative to each other to adopt locked and unlocked conditions. When the chamber 16 is in a locked condition, the first and second magnetic members 58, 60 face each other so as to magnetically attract. The first and third magnetic members 58, 62 are positionable via angular displacement of the first and second chamber parts 56, 24 to face each other and therefore magnetically repel, thereby biasing the first and second chamber parts 56, 24 away from each other to adopt the unlocked condition.

Therefore, the first and second magnetic members 58, 60 present opposite magnetic poles to each other and the first and third magnetic members 58, 62 present like magnetic poles to each other.

The second chamber part 24 includes a partitioning element 64 removable from a body of the second chamber part 24. The partitioning element 64 has at least one aperture therethrough and is preferably a grill, filter or sieve and forms at least part of a bottom of the cutting chamber 12 and at least part of a top of the primary holding chamber 16. The partitioning element 64 is preferably disc shaped, corresponding to a central aperture through the annular shaped cutting chamber body 24, and includes at least one radially extending protrusion 66 or tab at a circumferential edge. The third magnetic member is positioned on said partitioning element 64 and preferably on the radially extending protrusion 66. A fourth magnetic member 68 is positioned on the cutting chamber body 24. The third and fourth magnetic members 62, 68 are positionable so as to be aligned and oriented so as to magnetically attract, thereby locking the partitioning element 64 to the body 24. The third and fourth magnetic members 62, 68 therefore present opposite poles to each other. Whilst a fourth magnetic member is described, it will be appreciated that, in an embodiment not covered by the present claims, it may not be required and there may be only three magnetic members, two of which are positioned on one chamber part and presenting different poles to the magnetic member on the other chamber part, so as to attract or repel. In fact, only one magnetic member may be on each chamber part, the chamber parts being rotatable so that the magnetic members present like poles to each other so as to assist with separation of the chamber parts.

There are preferably four sets of first, second, third and fourth magnetic members 58, 60, 62, 68, although it will be appreciated that any number of sets of magnetic members may be considered, provided that magnetic engagement between the various components can be achieved. The magnetic member sets are equiangularly spaced apart from each other around a rim or circumferential edge of the chamber parts. There are therefore also preferably four protrusions 66 or tabs on the partitioning element 64, similarly equiangularly spaced apart around the circumferential edge of the partitioning element 64.

The second chamber part 24 has a groove 70 or recess for receiving or to receive each protrusion 66. Therefore, the second magnetic member 60, on the cutting chamber body 24, and third magnetic member 62, on the protrusion 66 of the partitioning element 64, may be coplanar. Each groove 70 preferably extends circumferentially or laterally with respect to the second chamber part 24, and the fourth magnetic member 68 is positioned at one circumferential or lateral end of the groove 70. This is so that the protrusion 66, and thus the third magnetic member 62, may be movable or rotatable in the radial plane within the groove 70 so as to be aligned with or overlap with the fourth magnetic member 68 and so as to be misaligned or unaligned with the fourth magnetic member 68. In this way the partitioning element 64 is lockable and unlockable, and so removable, from the remainder of the second chamber part 24.

The primary holding chamber 16 further comprises at least one female engagement member 72 on the first chamber part 56 and at least one male engagement member 74 on the second chamber part 24. The male engagement member 74 is preferably a tab or protrusion and the female engagement member 72 is preferably a groove or recess. The male engagement member 74 may be positioned at or adjacent to the circumferential edge of the cutting chamber body 24 and female engagement member 72 may be positioned at or adjacent to the circumferential edge of the first chamber part 56. The male and female engagement members 74, 72 may be curvate in the circumferential direction, corresponding to the curvature of the first and/or second chamber parts 56, 24. The female engagement member 72 preferably has a greater longitudinal or circumferential extent than the male engagement member 74, so that the male engagement member 74 is movable within the female engagement member 72.

At least one of the male and female engagement member 74, 72 has a sloped element, and preferably both have sloped elements 76a, 76b. The sloped element 76a on the male engagement member 74 may be considered to be a bevel or chamfer on the tab. The sloped element 76b on the female engagement member 72 may be considered to be a rise or a slope. There is preferably a sloped element 76a, 76b at each circumferential or longitudinal edge of the male and/or female engagement member 74, 72. A whole of the axially facing surface of the male and/or female engagement member 74, 72 may be sloped.

The pitch or gradient of the male and female engagement members 74, 72 may match, although it will be appreciated that they may differ.

There is preferably a plurality of sets of male and female engagement members 74, 72. Here there are four sets of male and female engagement members 74, 72, although any other number may be considered, which are equiangularly spaced apart. Each set of male and female engagement members 74, 72 may be adjacent to the position of magnetic members 58, 60, 62, 68.

Whilst the first magnetic member 58 is described as being on the first chamber part 56 and the second, third and fourth magnetic members 60, 62, 68 are described as being on the second chamber part 24, it will be appreciated that these positions may be reversed. Similarly, whilst the female engagement member 72 is described as being on the first chamber part 56 and the male engagement member 74 is described as being on the second chamber part 24, it will be appreciated that these positions may also be reversed.

Referring to Figure 1, the modular organic matter fragmenting apparatus 10 further comprises a further partitioning element 78 which separates the primary holding chamber 16 from the secondary holding chamber 18. The further partitioning element 78 is preferably similarly formed to the initially described partitioning element 64 although the further partitioning element 78 through apertures have a smaller radial extent. Therefore, the further partitioning element 78 may be a mesh or a finer sieve, filter or grill than the initially described partitioning element 64. Whilst only two partitioning elements are here described, it will be appreciated that the modular fragmenting apparatus may include a set of multiple partitioning elements having varying sizes of through apertures.

The secondary holding chamber 18 may be similarly formed to the primary holding chamber 16 and have similar magnetic fastening means or a magnetic fastening element and male and female engagement members. However, the first chamber part of the secondary holding chamber 18 is preferably a cup 80 with a continuous bottom, so as to prevent the passage of organic material therethrough. The second chamber part for or of the secondary holding chamber 18 may be a lower surface of the first chamber part 56 of the primary holding chamber 16. Therefore, the lower surface of the first chamber part 56 may have the same parts of the magnetic assembly and male engagement member as the lower surface of the cutting chamber. Alternatively, the second chamber part for or of the secondary holding chamber may be the lower surface of the cutting chamber.

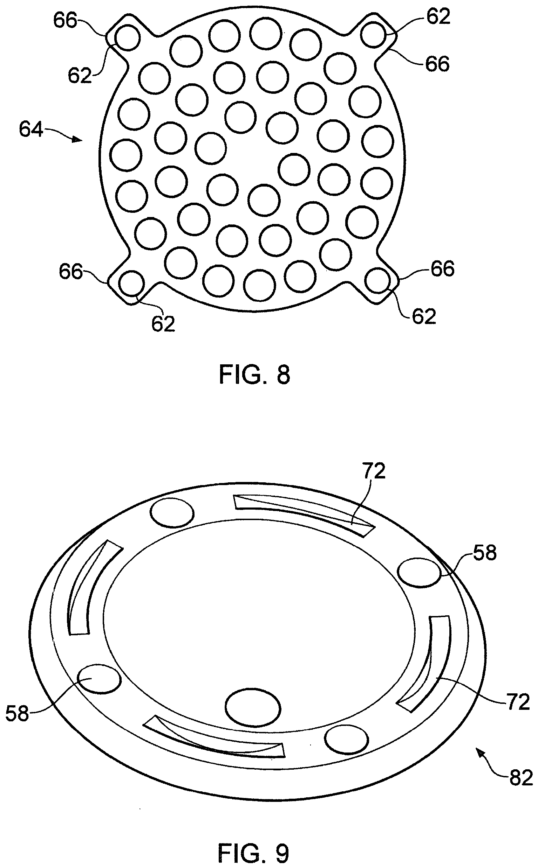

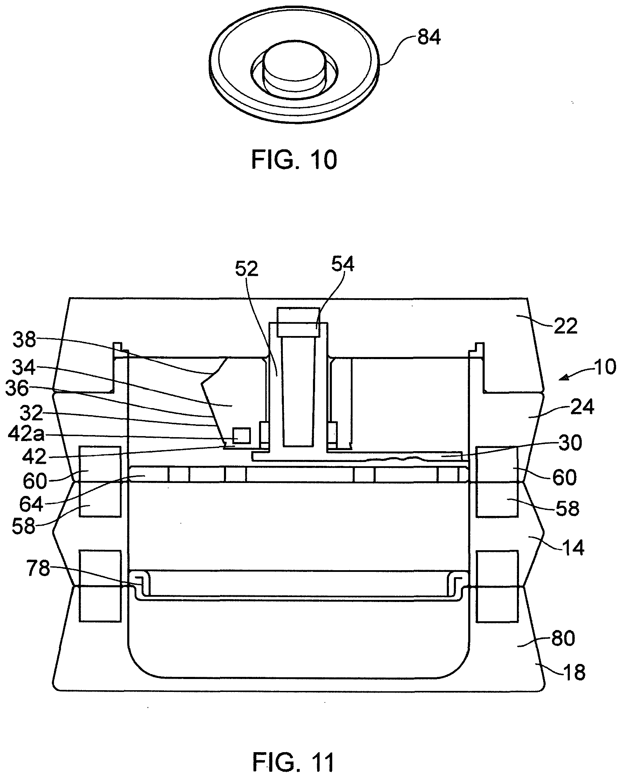

Referring to Figure 9, the modular organic matter fragmenting apparatus 10 may further comprise a funnel 82. The funnel 82 may have similar magnetic fastening means or a magnetic fastening element and male and female engagement members to the primary and secondary holding chambers 16, 18. These may be located at or adjacent to an inlet or entrance of the funnel 82. The funnel 82 may therefore be considered to be the first chamber part 56. As before, the lower surface of the primary holding chamber 16 or cutting chamber 12 may be the second chamber part 24. An outlet of the funnel 82 may have a removable cap 84, stop or plug as shown in Figure 10 to prevent the unintentional loss of organic matter therethrough. The cap 84 preferably has a groove or recess to allow connection to the outlet of the funnel.

In use, the modular organic matter fragmenting apparatus 10 may be constructed in a desired arrangement. The rotatable cutting element 30 may be connected to the cutting chamber 12 by inserting the pin 52 through the aperture of the presenting element 34.

The static cutting element 42, if present, may be attached to the bottom of the presenting element 34. This attachment may take the form of magnetic attachment, although it will be appreciated that an interference or other fastening means, such as fasteners, may be utilised. If during use, the cutting edge of the static cutting element 42 becomes blunt, the static cutting element 42 may be removed to be externally sharpened.

The partitioning element 64 may then be fastened to the cutting chamber body 24. This is achieved by inserting the protrusions 66 of the partitioning element 64 into the grooves 70 or recesses of the cutting chamber body 24 so that the third and fourth magnetic members 62, 68 are aligned and attract. The partitioning element 64 is therefore locked to cutting chamber body 24 and therefore prevents the through passage of organic matter which has a greater size that the extent of the apertures in the partitioning element 64. The partitioning element 64 may also prevent the removal of the rotatable cutting element 30 from the cutting chamber body 24. The partitioning element 64 may be unlocked from the cutting chamber body 24 by rotating the partitioning element 64 so that the protrusions 66 move in the groves and the third and fourth magnetic members 62, 68 are misaligned. The partitioning element 64 can then be removed if so desired.

Having attached the rotatable cutting element 30 and partitioning element 64, organic matter is inserted into the cutting chamber body 24, preferably so that it is equally distributed between the three cutting sub-chambers.

The lid 22 of the cutting chamber 12 is then positioned on the cutting chamber body 24 so that the lip 26 of the cutting chamber body 24 is received at, adjacent to or by the rim of the lid 22. If the low friction washer 28 is positioned on the lip 26 then this engages with the lid 22 or a further washer on the lid, to allow relative angular or rotational motion therebetween. The gear 54 of the pin 52 is received by the recess in the lid 22 and the magnetic members there may interengage to assist or create locking therebetween. The rotatable cutting element 30 is therefore attached and/fixed to the lid 22.

Next, any of the primary holding chamber 16, secondary holding chamber 18 or funnel 82 may be formed with or attached to the cutting chamber body 24, depending on the desired configuration of the modular organic matter fragmenting apparatus 10. These may preferably each be formed or attached in the same way as previously described, each having the magnetic fastening means and female engagement member.

This is achieved by the first chamber part 56 being aligned with the second chamber part 24 or cutting body so that the first and second magnetic members 58, 60 are aligned and the male and female engagement members 74, 72 are aligned. The male engagement member 74 is then received by the female engagement member 72 and the first and second magnetic members 58, 60 inter-attract. The interengagement of the male and female engagement members 74, 72 provides lateral support to the first and second chamber parts 56, 24 to prevent or inhibit unintentional disengagement in use.

To remove the first chamber part 56 from the second chamber part 24, the first and second chamber parts 56, 24 are rotated relative to each other. They are preferably rotated in a direction so that each first magnetic member 58 is moved towards the adjacent third magnetic member, although it will be appreciated that they may in fact be rotated in the opposing direction. The sloped element 76a of the male engagement member 74 rides, rises or travels up the sloped element 76b of the female engagement member 72. This enables the disengagement of the male and female engagement members 74, 72 with only a rotational force and without applying an axial force. This action also causes the axial separation of the first and second magnetic members 58, 60 which reduces, limits or prevents the magnetic attractive force therebetween, allowing the chamber parts 24, 56 to be separated. Given this rotation, the second and third magnetic members 60, 62 are aligned and, given their matching poles, repel which further assists or biases the chamber parts 24, 56 away from each other.

If the primary holding chamber 16 has been attached or fastened to the cutting chamber 12, then the secondary holding chamber 18 or funnel 82 may be attached or fastened to the primary holding chamber 16 in the same way as above.

The assembled organic matter fragmenting apparatus preferably has an ergonomic profile. This is achieved by at least one tapering portion and/or an undulating axial profile. Such a profile enables positive engagement by the user, which may be beneficial for users who may have inhibited fine motor or manual control.

Having assembled the modular organic matter fragmenting apparatus 10, as shown in Figure 11, and having inserted organic matter into the cutting chamber 12, the fragmenting of the organic matter may take place. The lid 22 of the cutting chamber 12 is rotated, preferably manually, with respect to the cutting chamber body 24.

Given the relative fixation of the rotatable cutting element 30 and the lid 22, the rotatable cutting element 30 also rotates moving the or each blade 46 through the chamber. The rotatable cutting element 30 is positioned between the partitioning element 64 and the bottom of the presenting element 34. Organic matter which is greater in size than the or each aperture of the partitioning element 64 sits on top of the partitioning element 64. As the rotatable cutting element 30 moves through the organic matter, it exhibits a force on the organic matter in the direction of rotation of the rotatable cutting element 30. This may cause the organic matter to move in the direction of rotation of the rotatable cutting element 30. The hooked portion 50 may preferably drag organic matter towards the presenting surface 32.

If the rotatable cutting element 30 is rotated towards the major presenting surface 32a then the organic matter may accumulate at the major presenting surface 32a, where it is stopped. The upstanding or chamfered profile of the presenting surface 32 may present the organic matter upwards so that it is aligned or substantially aligned with an axial direction. This therefore allows the organic matter to be cut through, rather than ground. Cutting rather than grinding is preferred due to preservation of the structure of trichromes which can exist as part of certain organic matter and may have desirable chemical compounds. However, it will be appreciated that the organic matter may in fact be ground between the rotatable cutting element and the bottom of the presenting surface and/or the partitioning element.

The or each rotatable cutting blade 46 cuts or fragments the organic matter as it passes through the organic matter and under the presenting element 34, given the inability of the organic matter to move having been stopped by the presenting surface 32. The organic matter may be repeatedly cut by passing blades 46 until it is of such a size that it falls through the holes in the partitioning element 64 under gravity. Additionally or alternatively, the organic matter may be cut between the static cutting element 44 and the rotatable cutting element 30.

The curvature of the presenting surface 32 increases the length of the presenting surface 32 available for cutting at or to cut at, within the cutting chamber 12. This improves cutting efficiency as compared to straight or linear presenting surfaces 32. Similarly, the curvature of the major presenting surface 32a can direct organic matter radially outwards, where a tangential speed of each blade 46 is greater and therefore cutting is more efficient. This direction is at least in part caused by the major presenting surface 32a being at least in part aligned or substantially aligned with a direction of rotation of rotatable cutting blade 46. This alignment is preferably proximal to the axis of rotation R. The nonuniform upper chamfer 38 similarly directs organic matter radially outwards. The upper chamfer 38 and/or the radial nonuniform profile of the upper chamfer can also create a generally circular motion of the organic matter within the cutting chamber 12, encouraging vertical motion of the organic matter thereby directing unfragmented organic matter at the top of the cutting chamber 12 around, against a cutting direction, and down to the bottom of the presenting surface 32 to be cut. The counter curve can assist with trapping organic matter at the radial outermost edge of the presenting surface 32 for efficient fragmentation.

If the rotatable cutting element 30 is rotated towards the minor presenting surface 32b, then the major presenting surface 32a can assist directing organic material towards the minor presenting surface 32b for cutting or to cut against. Cutting against the minor presenting surface 32b happens in the same or similar way as against the major presenting surface 32a.

Having fallen through the partitioning element 64 under the effect of gravity, the organic matter is accumulated in the primary or secondary holding chamber 16, 18 or funnel 82. In the event that the primary and secondary holding chambers 16, 18 are utilised, organic matter which is finer in size than the further partitioning element 78 falls through to the secondary holding chamber 18 under gravity. This finer organic matter may include plant pollen. Should the funnel 82 be utilised, the cap on the funnel 82 may be kept in place, storing the organic matter until it is desired to be utilised. The cap may be removed, and the organic matter distributed from the funnel 82. The funnel 82 allows for more direct and/or precise distribution or application of organic matter from the fragmentation apparatus 10.

It will be appreciated that the cutter may have multiple rotatable cutting elements. For example, the cutter may have two axially offset cutting elements receivable within cutting chamber to enable for more rapid or finer cutting. The arms of the cutting element may be radially offset from one another. Alternatively, the pin may project beyond the cutting chamber and the partitioning element so that it is receivable in the holding chamber with a further cutting element at the end of the pin. In this way the holding chamber may function as a secondary cutting chamber, thereby allowing for repeated cutting.

It is therefore possible to provide a modular herb grinding apparatus having three magnetically engageable body portions in a tower configuration and a lid which is rotatably engageable with a cutting blade. The top body portion and lid form an inlet chamber, for adding or to add uncut herbs. The top and middle body portions form a first holding chamber, for holding or to hold cut herbs with the inlet chamber and first holding chamber being separated by a filter. The middle body portion and bottom body portion form a second holding chamber and a finer filter separates the first and second holding chambers. The middle and/or bottom body portions can be replaced by a funnel. The body portions have tabs and corresponding grooves which provide lateral support to maintain the holding chambers closed. Sloped elements on the tabs and grooves also assist with opening and/or unlocking the chambers by only requiring rotational force to be applied to disengage the tabs and groves. The inlet chamber has a presenting surface which presents herbs in an upstanding manner so as to be efficiently cut by the rotatable cutting blade. The presenting surface is curvate and extends beyond a rotational axis which increases the extent of the presenting surface in the inlet chamber to improve cutting efficiency.

The words 'comprises/comprising' and the words 'having/including' when used herein with reference to the present invention are used to specify the presence of stated features, integers, steps or components, but do not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

The embodiments described above are provided by way of examples only, and various other modifications will be apparent to persons skilled in the field without departing from the scope of the invention as defined in the claims.

## Claims

1. An organic-matter holding chamber (16) for holding organic matter in a handholdable organic-matter fragmentation apparatus (10), the chamber comprising (16):
a first chamber part (56) having a first magnetic member (58);
a second chamber part (24) having second and third magnetic members (60, 62);
the first and second chamber parts (56, 24) being rotatable relative to each other to adopt locked and unlocked conditions and the second and third magnetic members (60, 62) being angularly offset relative to each other;
when the chamber (16) is in the locked condition, the first and second magnetic (58, 60) members facing each other so as to magnetically attract; and
the first and third magnetic members (58, 60) being positionable via angular displacement of the first and second chamber parts (56, 24) to magnetically repel thereby biasing the first and second chamber parts (56, 24) away from each to adopt the unlocked condition
**characterised in that** the second chamber part (24) includes a partitioning element (64) removable from a body of the second chamber part (24), the third magnetic member (62) being positioned on said partitioning element (64), and a fourth magnetic member (68) on the body, the third and fourth magnetic members (62, 68) being positionable so as to be aligned and oriented so as to magnetically attract, thereby locking the partitioning element (64) to the body.

2. An organic matter holding chamber (16) as claimed in claim 1, further comprising an organic matter cutter (14) having a removably attachable static cutting element (42).

3. An organic-matter holding chamber (16) as claimed in claim 1 or claim 2, wherein the second and third magnetic members (60, 62) are coplanar or substantially coplanar.

4. An organic-matter holding chamber (16) as claimed in any one of the preceding claims, wherein at least one of the first and second chamber parts (56, 24) has a rotationally symmetrical profile.

5. An organic-matter holding chamber (16) as claimed in any one of the preceding claims, wherein there are a plurality of sets of first, second and third magnetic members (58, 60, 62), each said set of magnetic members being angularly offset relative to an adjacent set of magnetic members.

6. An organic-matter holding chamber (16) as claimed in any one of the preceding claims , wherein the partitioning element (64) is repositionable relative to the body via angular displacement so that the third and fourth magnetic members (62, 68) are misaligned, thereby unlocking the partitioning element (64) to the body.

7. An organic-matter holding chamber (16) as claimed in any one of the preceding claims wherein the first chamber part (56) has a female engagement member (72) and the second chamber part (24) has a male engagement member (74);
at least one of the male and female engagement members (74, 72) having a sloped element (76a, 76b); when the chamber (16) is in the locked condition, the male engagement member (74) is engaged with the female engagement member (72); and
when adopting the unlocked condition, the first chamber part (56) is movable relative to the second chamber part (24) such that the or each sloped element (76a, 76b) assists a release of the first and second magnetic (58, 60) members and a disengagement of the male and female engagement members (74, 72).

## Patentansprüche

1. Aufnahmekammer (16) für organisches Material zum Aufnehmen von organischem Material in einer handhaltbaren Vorrichtung (10) für eine Fragmentierung von organischem Material, die Kammer (16) umfassend:
einen ersten Kammerteil (56), der ein erstes magnetisches Element (58) aufweist;
einen zweiten Kammerteil (24), der ein zweites und ein drittes magnetisches Element (60, 62) aufweist,
wobei der erste und der zweite Kammerteil (56, 24) relativ zueinander drehbar sind, um einen arretierten und einen nicht arretierten Zustand anzunehmen, und das zweite und das dritte magnetische Element (60, 62) relativ zueinander winkelmäßig versetzt sind; wenn sich die Kammer (16) in dem arretierten Zustand befindet, das erste und das zweite magnetische Element (58, 60) einander zugewandt sind, um sich magnetisch anzuziehen; und
wobei das erste und das dritte magnetische Element (58, 60) über eine Winkelverschiebung des ersten und des zweiten Kammerteils (56, 24) positionierbar sind, um sich magnetisch abzustoßen, wobei dadurch der erste und der zweite Kammerteil (56, 24) voneinander weg vorgespannt werden, um den nicht arretierten Zustand anzunehmen
**dadurch gekennzeichnet, dass** der zweite Kammerteil (24) ein Trennelement (64) beinhaltet, das von einem Körper des zweiten Kammerteils (24) entfernbar ist, wobei das dritte magnetische Element (62) auf dem Trennelement (64) positioniert ist, und ein viertes magnetisches Element (68) auf dem Körper positioniert ist, wobei das dritte und das vierte magnetische Element (62, 68) so positionierbar sind, dass sie derart ausgerichtet und orientiert sind, dass sie sich magnetisch anziehen, wobei dadurch das Trennelement (64) an dem Körper arretiert wird.

2. Aufnahmekammer (16) für organisches Material nach Anspruch 1, ferner umfassend eine Schneideinrichtung (14) für organisches Material, die ein entfernbar anbringbares statisches Schneidelement (42) aufweist.

3. Aufnahmekammer (16) für organisches Material nach Anspruch 1 oder 2, wobei das zweite und das dritte magnetische Element (60, 62) koplanar oder im Wesentlichen koplanar sind.

4. Aufnahmekammer (16) für organisches Material nach einem der vorstehenden Ansprüche, wobei mindestens einer von dem ersten und dem zweiten Kammerteil (56, 24) ein rotationssymmetrisches Profil aufweist.

5. Aufnahmekammer (16) für organisches Material nach einem der vorstehenden Ansprüche, wobei eine Vielzahl von Sätzen erster, zweiter und dritter magnetischer Elemente (58, 60, 62) vorhanden sind, wobei jeder Satz magnetischer Elemente relativ zu einem angrenzenden Satz magnetischer Elemente winkelmäßig versetzt ist.

6. Aufnahmekammer (16) für organisches Material nach einem der vorstehenden Ansprüche, wobei das Trennelement (64) relativ zu dem Körper über die Winkelverschiebung repositionierbar ist, sodass das dritte und das vierte magnetische Element (62, 68) fehlausgerichtet sind, wobei dadurch die Arretierung des Trennelements (64) an dem Körper gelöst wird.

7. Aufnahmekammer (16) für organisches Material nach einem der vorstehenden Ansprüche, wobei der erste Kammerteil (56) ein weibliches Eingriffselement (72) aufweist und der zweite Kammerteil (24) ein männliches Eingriffselement (74) aufweist;
mindestens eines von dem männlichen und dem weiblichen Eingriffselement (74, 72) ein geneigtes Element (76a, 76b) aufweist;
wenn sich die Kammer (16) in dem arretierten Zustand befindet, das männliche Eingriffselement (74) mit dem weiblichen Eingriffselement (72) in Eingriff steht; und
wenn der arretierte Zustand angenommen wird, der erste Kammerteil (56) relativ zu dem zweiten Kammerteil (24) beweglich ist, sodass das oder jedes geneigte Element (76a, 76b) ein Lösen des ersten und des zweiten magnetischen Elements (58, 60) und ein Außereingriffbringen des männlichen und des weiblichen Eingriffselements (74, 72) unterstützt.

## Revendications

1. Chambre de réception de matière organique (16) destinée à contenir une matière organique dans un appareil de fragmentation de matière organique portatif (10), la chambre comprenant (16) :
une première partie de chambre (56) ayant un premier élément magnétique (58) ;
une seconde partie de chambre (24) ayant des deuxième et troisième éléments magnétiques (60, 62) ;
les première et seconde parties de chambre (56, 24) pouvant tourner l'une par rapport à l'autre pour adopter des états verrouillé et déverrouillé et les deuxième et troisième éléments magnétiques (60, 62) étant angulairement décalés l'un par rapport à l'autre ; lorsque la chambre (16) est dans l'état verrouillé, les premier et deuxième éléments magnétiques (58, 60) se font face de manière à s'attirer magnétiquement ; et
les premier et troisième éléments magnétiques (58, 60) pouvant être positionnés par déplacement angulaire des première et seconde parties de chambre (56, 24) pour se repousser magnétiquement, de façon à solliciter ainsi les première et seconde parties de chambre (56, 24) à l'écart l'une de l'autre pour adopter l'état déverrouillé
**caractérisée en ce que** la seconde partie de chambre (24) comporte un élément de séparation (64) pouvant être retiré d'un corps de la seconde partie de chambre (24), le troisième élément magnétique (62) étant positionné sur ledit élément de séparation (64), et un quatrième élément magnétique (68) sur le corps, les troisième et quatrième éléments magnétiques (62, 68) pouvant être positionnés de manière à être alignés et orientés de manière à s'attirer magnétiquement, verrouillant ainsi l'élément de séparation (64) sur le corps.

2. Chambre de réception de matière organique (16) selon la revendication 1, comprenant en outre un dispositif de coupe de matière organique (14) ayant un élément de coupe statique pouvant être fixé de manière amovible (42).

3. Chambre de réception de matière organique (16) selon la revendication 1 ou la revendication 2, dans laquelle les deuxième et troisième éléments magnétiques (60, 62) sont coplanaires ou sensiblement coplanaires.

4. Chambre de réception de matière organique (16) selon l'une quelconque des revendications précédentes, dans laquelle la première et/ou la seconde partie de chambre (56, 24) a un profil à symétrie de rotation.

5. Chambre de réception de matière organique (16) selon l'une quelconque des revendications précédentes, dans laquelle il existe une pluralité d'ensembles de premier, deuxième et troisième éléments magnétiques (58, 60, 62), chacun desdits ensembles d'éléments magnétiques étant angulairement décalé par rapport à un ensemble adjacent d'éléments magnétiques.

6. Chambre de réception de matière organique (16) selon l'une quelconque des revendications précédentes, dans laquelle l'élément de séparation (64) est repositionnable par rapport au corps par déplacement angulaire de sorte que les troisième et quatrième éléments magnétiques (62, 68) sont désalignés, déverrouillant ainsi l'élément de séparation (64) sur le corps.

7. Chambre de réception de matière organique (16) selon l'une quelconque des revendications précédentes, dans laquelle la première partie de chambre (56) a un élément de mise en prise femelle (72) et la seconde partie de chambre (24) a un élément de mise en prise mâle (74) ;
l'élément de mise en prise mâle et/ou femelle (74, 72) ayant un élément incliné (76a, 76b) ;
lorsque la chambre (16) est dans l'état verrouillé, l'élément de mise en prise mâle (74) vient en prise avec l'élément de mise en prise femelle (72) ; et
lors de l'adoption de l'état déverrouillé, la première partie de chambre (56) est mobile par rapport à la seconde partie de chambre (24) de sorte que le ou chaque élément incliné (76a, 76b) assiste une libération des premier et second éléments magnétiques (58, 60) et un désaccouplement des éléments de mise en prise mâle et femelle (74, 72).
